# EUROPÄISCHE PATENTSCHRIFT

(11) **EP 4 677 732 B1**
(45) Veröffentlichungstag und Bekanntmachung des Hinweises auf die Patenterteilung: **07.10.2026**
(21) Anmeldenummer: 24705983.5
(22) Anmeldetag: 08.02.2024
(51) Int. Cl.: H02K 15/043

(54) **VORRICHTUNG UND VERFAHREN ZUM FORMEN EINER ZUM EINZUG IN EINEN STATOR, ROTOR ODER IN EIN EINZIEHWERKZEUG VORGESEHENEN WELLENWICKLUNGSMATTE**
DEVICE AND METHOD FOR FORMING A WAVE WINDING MAT INTENDED FOR INSERTION INTO A STATOR, ROTOR OR INSERTION TOOL
DISPOSITIF ET PROCÉDÉ DE FORMATION D'UN TAPIS D'ENROULEMENT ONDULÉ DESTINÉ À ÊTRE INSÉRÉ DANS UN STATOR, UN ROTOR OU UN OUTIL D'INSERTION

(30) Priorität: 09.03.2023 DE 102023105804
(43) Veröffentlichungstag der Anmeldung: 14.01.2026
(73) Patentinhaber: Schaeffler Technologies AG & Co. KG, 91074 Herzogenaurach (DE)
(72) Erfinder: STRASSBURGER, Dirk, 77836 Rheinmünster (DE)
(74) Vertreter: Schaeffler Technologies
(86) Internationale Anmeldenummer: PCT/DE2024/100110
(87) Internationale Veröffentlichungsnummer: WO 2024/183847

(56) Entgegenhaltungen:
- DE-A1- 102014 220 589
- DE-A1- 102021 122 115

## Beschreibung

Die vorliegende Erfindung betrifft eine Vorrichtung sowie ein Verfahren zum Formen einer zum Einzug in einen Stator, Rotor oder in ein Einziehwerkzeug vorgesehenen Wellenwicklungsmatte, wie zum Beispiel aus der DE 10 2021 122 115 A1 bekannt.

Wellenwicklungsmatten als Form der Spulenwicklung können durch das Wickeln von Einzeldrähten in Drahtpaketen um eine Wickelschablone hergestellt werden. Wenn die Einzeldrähte einen rechteckigen Querschnitt haben, dann spricht man von Flachdrahtwicklungen. Durch ein solches Verfahren ergibt sich eine flache, wellenförmige Spulenwicklung, welche auch als Wellenwicklung bezeichnet wird und dachförmige Wickelköpfe aufweist, die im Verlauf der Einzeldrähte der Wellenwicklung zwischen zwei geraden Drahtstegen angeordnet sind. Bei Einzug in einen Rotor oder Stator mit einem zylindrischen Rotor- oder Statorkörper wird die Wellenwicklung mit den übereinanderliegenden Einzeldrähten im Bereich der Stege in Nuten eingezogen und die Wickelköpfe ragen axial über den Rotor- oder Statorkörper hinaus und bilden den Versatz der Einzeldrähte über verschiedene Nuten. Durch so hergestellte Spulenwicklung lassen sich Spulen mehrerer elektrischer Kreise auf einmal in einen Stator- oder Rotorkörper einbringen, sodass beispielsweise ein dreiphasiger Betrieb eines Elektromotors möglich ist. Daher weisen die verwendeten Drahtpakete bevorzugt eine Anzahl von Einzeldrähten aus einem Vielfachen von drei auf. Es sind aber auch andere Konstellationen denkbar. Ebenfalls ist denkbar, dass die hergestellte Wellenwicklung nicht direkt in einen Rotor oder Stator eingezogen wird, sondern zunächst in ein Einziehwerkzeug, welches die Wellenwicklung letztendlich in einen Rotor- oder Statorkörper überführt.

Durch das vorstehend beschriebene Verfahren ist insbesondere bei der Verwendung von im Querschnitt rechteckigen Drähten für Flachdrahtwicklungen eine starke plastische Verformung der Drähte beim Umbiegen der Einzeldrähte um die Wickelschablone zu erwarten, nämlich dann, wenn die Wickelschablone gedreht wird und die geneigten Bereiche um eine Kante der Wickelschablone geformt und anschließend flachgepresst werden. Es entsteht zunächst eine je nach Kantenausbildung der Wickelschablone eine mehr oder weniger starke Torsion in den im Querschnitt rechteckigen Drähten, die einerseits Raum beansprucht und andererseits eine an den Drähten vorhandene Isolationsschicht beschädigen kann. Bei einer übermäßigen Verformung der Drähte droht diese Isolationsschicht abzuplatzen und bildet eine Fehlstelle in der Spulenwicklung. Schon eine Fehlstelle in einer Spulenwicklung kann zu einem Ausschuss des gesamten Bauteils führen. Bei einem Verpressen zur Erreichung einer möglichst geringen räumlichen Ausdehnung der Wickelköpfe einer in einen Rotor, Stator, oder ein Einziehwerkzeug eingelegten Spulenwicklung können auch die Kanten einer Drahtstelle in einen benachbarten Draht eindrücken und die Isolationsschicht zerstören.

Beim Flachdraht-Wellenwickeln muss die Wickelmatte im Bereich ihrer Wickelköpfe nach dem Wickelvorgang auf ein bestimmtes Höhenmaß geformt werden, bevor sie weiterverarbeitet werden kann. Das Formen der Wellenwicklungsmatte vor dem Rollieren ist notwendig, da ansonsten die Wickelköpfe, d.h. die Randbereiche der Wellenwicklungsmatte, zu groß sind. In der Folge könnte dadurch beispielsweise der Stator beschädigt werden, was durch eine geformte Wellenwicklungsmatte verhindert werden kann. Dies wird standardmäßig mittels Pressen durchgeführt, die die Wellenwicklungsmatte Stück für Stück pressen. Mit zunehmender Drahtstärke und Wickelkopfbreite erhöht sich die benötigte Kraft beim Formen, und somit auch die Gefahr die Isolation der Kupferdrähte zu beschädigen. Bei den bekannten Verfahren kann es beim Formvorgang insbesondere an der Isolation der einzelnen Drähte zu Beschädigungen kommen. Insbesondere bei einer höheren Drahtstärke der einzelnen Drähte ist die Gefahr der Beschädigung groß. Eine solche Beschädigung in der Isolation führt dazu, dass die gesamte Wellenwicklungsmatte beschädigt und nicht nutzbar ist. Der Formprozess soll bei jeder Drahtstärke ohne Gefahr einer Beschädigung der Einzeldrähte, insbesondere der die Drähte umhüllende Isolation, durchführbar sein.

Es ist daher Aufgabe der vorliegenden Erfindung, eine Vorrichtung sowie ein Verfahren zum Formen einer zum Einzug in einen Stator, Rotor oder in ein Einziehwerkzeug vorgesehenen Wellenwicklungsmatte bereitzustellen, die die genannten Nachteile nicht aufweist.

Diese Aufgabe wird gelöst durch den Gegenstand der unabhängigen Patentansprüche.

Vorteilhafte Ausgestaltungen und Weiterbildungen sind Gegenstand der Unteransprüche, der beiliegenden Beschreibung sowie der Figuren.

Gemäß einem Aspekt der Erfindung ist eine Vorrichtung zum Formen einer zum Einzug in einen Stator, Rotor oder in ein Einziehwerkzeug vorgesehenen Wellenwicklungsmatte vorgesehen. Die Wellenwicklungsmatte weist seitliche Bereiche in Form von Wickelköpfen auf. Der hier als Formen bzw. Pressen bezeichnete Vorgang bedeutet in der Regel nicht, dass sich dadurch eine Umformung im Sinne einer Dickenänderung der Einzeldrähte ergibt. Vielmehr wird hier eine reine Verformung der Einzeldrähte im Sinne eines Ausrichtens der Wicklung mit dem Begriff "Pressen" bezeichnet, die eine flachere Ausbildung der erzeugten Wicklung und nicht der einzelnen Drähte zum Ziel hat. Das Pressen kann durch ein Andrücken der Einzeldrähte aus einer Richtung senkrecht zu der Spulenwicklung erfolgen, oder durch ein Auswalzen der Spulenwicklung mittels einer Rolle. Für den im weiteren Verlauf erwähnten Begriff "Walzen" gilt ebenfalls, dass dieser, anders als z.B. bei der Blechfertigung nicht so verstanden werden soll, dass sich dadurch eine Umformung im Sinne einer Dickenänderung der Einzeldrähte ergibt, sondern ein Ausrichten der Drähte erfolgt. Bevorzugt wird die Vorrichtung zur Formung von Wellenwicklungsmatten eingangs beschriebener Art verwendet, es ist aber auch denkbar, anders hergestellte Wellenwicklungsmatten, beispielsweise kontinuierlich gewickelte Wellenwicklungsmatten zu formen.

Die Vorrichtung umfasst eine untere und eine obere entlang einer Achse X verlaufende Formreihe. Zwischen diesen beiden Formreihen ist die Wellenwicklungsmatte auf einer Unterlage entlang der Achse X hindurchführbar. Die Unterlage wird mittels eines Antriebs durch die Vorrichtung geführt. In bevorzugter Ausgestaltung der Erfindung ist die Unterlage als Linearmagazin gebildet. Dadurch, dass zwei Formreihen vorgesehen sind, ist die Wellenwicklungsmatte von ihrer Ober- wie von ihrer Unterseite her formbar. Die Formreihen sind jeweils aus wenigstens zwei Rollenpaaren gebildet. Die Rollenpaare der unteren und oberen Formreihe sind derart angeordnet, dass jeweils ein Rollenpaar der untern mit einem Rollenpaar der oberen korrespondiert. In bevorzugter Ausgestaltung weist jede Formreihe wenigstens vier, besonders bevorzugt wenigstens sechs Rollenpaare auf. Je höher die Anzahl an Rollenpaaren ist, desto schonender ist das Formen der Wellenwicklungsmatte. Jedes Rollenpaar, egal ob es in der unteren oder oberen Formreihe angeordnet ist, ist aus zwei auf einer um eine Achse Y, Y' rotierenden Antriebswelle angeordneten Einzelrollen gebildet. Diese Achsen Y und Y' sind lotrecht zur Achse X angeordnet, entlang welcher die Wellenwicklungsmatte durch die Vorrichtung geführt wird. Die Rollenpaare sind zur Formung der Wickelköpfe der Wellenwicklungsmatte vorgesehen. Die Anordnung der Einzelrollen ist daher ausgerichtet auf die Breite der Wellenwicklungsmatte, sodass die zu formenden Bereiche genau getroffen werden. Der Abstand der Formreihen zueinander verringert sich von einer Einzugsseite der Vorrichtung hin zu einer Ausgabeseite der Vorrichtung. Dies bietet den Vorteil, dass die Wellenwicklungsmatte kontinuierlich formbar und auf der Unterlage durch die Vorrichtung führbar ist. Die ungeformte Wellenwicklungsmatte weist beim Einzug in die Vorrichtung eine Wickelkopfdicke a auf und nach der Ausgabe weisen die geformten Bereiche eine Wickelkopfdicke b auf, die die Zielgröße ist, die mittels der Vorrichtung zu erreichen ist. Dadurch lässt sich die Taktzeit bei der Herstellung der Wellenwicklungsmatte deutlich verringern, da das Formen sowie das Bewegen der Wellenwicklungsmatte zeitgleich statt wechselweise durchführbar sind. Das spart Zeit und weitere Prozesse können direkt angeschlossen werden, wie beispielsweise das Rollieren der Wellenwicklungsmatte.

Zudem wird ein doppeltes Formen überlappender Randbereiche wie beim Pressen mittels Druckplatten vermieden. Bei dieser Art zu Formen wird der bearbeitete Abschnitt der Wellenwicklungsmatte nach jedem Pressvorgang aus der Presse befördert, bevor der nächste Abschnitt geformt wird. Dabei wird ein gewisser Randbereich jedoch als Sicherheit in der Presse zurückgehalten und damit doppelt gepresst. Dies kann zu einem unterschiedlichen Höhenmaß an den geformten Stellen der Wellenwicklungsmatte und einer Art Wellenmuster in der Wellenwicklungsmatte führen, was sich nachteilig auf die Verwendung auswirken kann. Die erfindungsgemäße Ausgestaltung mit dem sich verringernden Abstand zwischen den beiden Formreihen in Einzugsrichtung der Wellenwicklungsmatte hat im Vergleich dazu den Vorteil, dass die Wellenwicklungsmatte kontinuierlich von Rollenpaar zu Rollenpaar dünner gepresst wird. Der Druck, der auf die Drähte der Wellenwicklungsmatte wirkt, ist nicht so hoch wie bei einer statischen Pressung in einem Vorgang. Die Gefahr der Beschädigung durch Ausüben eines zu hohen punktuellen Drucks ist dadurch stark verringert.

Bevorzugt sind die Einzelrollen zylindrisch ausgestaltet. Bevorzugt sind sie aus Stahl gefertigt. Es ist auch denkbar, andere Materialien für die Rollen vorzusehen. Beispielsweise könnte Kunststoff, Gummi oder Keramik verwendet werden. Es ist darüber hinaus auch denkbar, die Rollen mit einer Hülse zu versehen, die beispielsweise aus Kunststoff, Keramik oder Gummi gefertigt ist. Kunststoff eignet sich gut, weil dadurch die Gefahr von Beschädigung der Wellenwicklungsmatte, beispielsweise an der Isolation, sehr geringgehalten werden kann. Einzelrollen aus Stahl oder mit aus Stahl gefertigten Hülsen sind dagegen aufgrund der Materialhärte sehr langlebig. Die Wahl des passenden Materials für die Einzelrollen ist individuell anpassbar an die zu bearbeitende Wellenwicklungsmatte und deren Materialeigenschaften, um Beschädigungen vorzubeugen.

Die erfindungsgemäße Vorrichtung ist zudem vorteilhaft, weil sie vergleichsweise wenig Platz benötigt. Der Platz in Fertigungshallen ist begrenzt und Formstationen mit Pressen benötigen viel Platz, insbesondere, da über eine Arbeitslänge bis zu mehreren Metern gepresst wird. Die erfindungsgemäße Vorrichtung demgegenüber kann bevorzugt auf Arbeitslängen von 500-800 mm eingesetzt werden, da kontinuierlich geformt wird, während die Wellenwicklungsmatte auf der Unterlage durch die Vorrichtung geführt wird.

Die Vorrichtung ist flexibel an verschiedenen Stellen im Herstellungsprozess der Wellenwicklungsmatte anbringbar, beispielsweise direkt im Übergabebereich vor dem Rollieren und ohne weitere Unterbrechungen. Dies spart weiteren Platz im Herstellungsprozess.

Es ist zudem vorteilhaft, große Rollendurchmesser für die Einzelrollen zu wählen. Je größer der Durchmesser der einzelnen Rollen ist, desto langsamer erhöht sich beim Formen der Anpressdruck, der auf die Wellenwicklungsmatte wirkt. Dieses Vorgehen ist schonender für die Wellenwicklungsmatte und sorgt dafür, dass Beschädigungen durch zu hohen punktuellen Druck vermieden werden. Zudem ist durch einen größeren Rollendurchmesser der Weg zwischen den Rollen, auf dem sich die Wellenwicklungsmatte partiell entspannen kann, größer. Bevorzugt ist die Größe der Durchmesser in Abhängigkeit so zu wählen, dass bei Wellenwicklungsmatten, die aus Einzeldrähten gebildet sind, ein ganzer Einzeldraht inklusive Drahtsprung im Bereich zwischen zwei Rollen liegt und so im Ganzen entspannen kann, bevor er von der nachfolgenden Rolle erneut geformt wird. Die Dauer des Anpressens ist dagegen vernachlässigbar. Die zwischenzeitliche Druckentlastung ist wichtig, um eine Neupositionierung der Einzeldrähte der Wellenwicklungsmatte zu ermöglichen. Die Rückfederung nach Wegfall des Anpressdrucks ist nicht groß, aber die Positionierungsfreiheit wieder gegeben. Daher ist eine Entspannung der Wellenwicklungsmatte über den Gesamtbereich eines Einzeldrahtes auch vorteilhaft, um die freie Positionierung zu ermöglichen, ohne dass an einer Stelle des Einzeldrahtes Druck anliegt.

Einen erheblich größeren Einfluss als die Dauer hat der Druck, der auf die Wellenwicklungsmatte ausgeübt wird. Um in einem Pressvorgang die gewünschte Endform zu erreichen, ist es aber, wie eingangs erwähnt, deutlich schonender, die Wellenwicklungsmatte kontinuierlich dünner zu formen als ein einmaliges Anpressen unter hohem Druck.

Durch den Formprozess wird die Gesamtbreite der Wellenwicklungsmatte beeinflusst. Durch das Formen erhöht sich diese, sodass die Wellenwicklungsmatte nach dem Formvorgang eine größere Gesamtbreite aufweist als vorher. Beispielsweise kann die Matte nach dem Formen um 2-5 mm breiter sein als vor dem Formprozess. Dies ist abhängig von der Ausgangsbreite der Wellenwicklungsmatte und vom Formprozess und ist individuell anpassbar. Es ist durch verschiedene Anordnungen der Einzelrollen denkbar, dass der Breitenzuwachs an beiden geformten Seiten der Matte gleich ist. Es ist aber auch denkbar, dass die Seiten unterschiedlich geformt werden, indem die korrespondierenden Einzelrollen entsprechend angeordnet werden.

Gemäß einer weiteren Ausführungsform der Erfindung ist zumindest die obere Formreihe höhenverstellbar ausgestaltet. Das bietet den Vorteil, dass die Vorrichtung für das Formen verschiedener Typen von Wellenwicklungsmatten geeignet ist. Die obere Formreihe kann dann je nachdem, wie groß die Wickelkopfdicke a, die die Wellenwicklungsmatte vor dem Formvorgang aufweist, bzw. wie groß die angestrebte Wickelkopfdicke b nach dem Verlassen der Vorrichtung ist, angepasst werden. Dies ist insbesondere im Blick auf eine kosteneffiziente Ausgestaltung des Herstellungsprozesses vorteilhaft, da nicht für jede Änderung eine separate Vorrichtung benötigt wird. Es ist auch denkbar, dass die obere und die untere Formreihe höhenverstellbar ausgestaltet sind. Dies vergrößert die Einstellmöglichkeiten zusätzlich.

Gemäß einer weiteren Ausführungsform der Erfindung sind die Rollenpaare der oberen Formreihe unabhängig voneinander höhenverstellbar. Auf diese Weise kann die Höheneinstellung individuell verändert werden. Dies ermöglicht eine besonders genaue Einstellung der Abstände zwischen den korrespondierenden Rollenpaaren, um den Formvorgang möglichst exakt auf die Wellenwicklungsmatte und ihre Zielgeometrie auszurichten.

Gemäß einer weiteren Ausführungsform der Erfindung ist ein der angestrebten Dicke der Wickelköpfe entsprechendes Endmaß zur Einstellung der Rollenpaare vorgesehen. Hierzu kann beispielsweise eine Einstellleiste vorgesehen sein, die den geringsten Abstand der Rollenpaare der oberen Formreihe zu den korrespondierenden Rollenpaaren der unteren Formreihe definiert. Soll der Abstand zwischen zwei korrespondierenden Rollenpaaren vergrößert werden, kann ein Endmaß in der Höhe, um die der Abstand vergrößert werden soll, auf die Einstellleiste aufgelegt werden. Ist die Vorrichtung im Grundzustand, befinden sich alle Rollenpaare auf der Höhe, die die Einstellleiste vordefiniert. Sobald ein Endmaß aufgelegt wird, verändert sich die Höhe der Antriebswelle, unter der das Endmaß angebracht wurde und mit ihr die des darauf angeordneten Rollenpaars. So kann auf einfache Weise sichergestellt werden, dass der korrekte Abstand eingestellt ist, da die Endmaße beispielsweise beschriftet sein können (z.B. mit ihrem Höhenmaß), sodass die korrekte Zuordnung auf schnelle und einfache Weise möglich ist.

Gemäß einer weiteren Ausführungsform der Erfindung ist der Abstand zwischen den Einzelrollen jedes Rollenpaars auf der Antriebswelle variabel einstellbar. Dadurch ist es beispielsweise möglich, die Rollen kaskadiert anzuordnen. In einem solchen Fall ist der Abstand zwischen dem ersten Rollenpaar nach dem Einzug am engsten und erhöht sich hin zum letzten Rollenpaar. Dabei sind die einander in den Formreihen korrespondierend angeordneten Rollenpaare bevorzugt jeweils in derselben Breite eingestellt, sodass sie exakt übereinander positioniert sind. Das bedeutet, dass der Abstand der Einzelrollen eines Rollenpaar der unteren Reihe mit dem Abstand der Einzelrollen des mit diesem korrespondierenden Rollenpaars der oberen Reihe übereinstimmt. Das führt zu einer stabilen Lage der Wellenwicklungsmatte in der Vorrichtung, da die Wellenwicklungsmatte oben, wie unten auf derselben Breite geformt wird. Durch eine kaskadierte Anordnung können die Wickelköpfe auf beiden Seiten der Wellenwicklungsmatte von innen nach außen hin geformt werden. Diese Art des Formens der Wellenwicklungsmatte ermöglicht ein besonders schonendes Formen der Wickelköpfe. Der Formprozess wird in einem innenliegenden Bereich der Wellenwicklungsmatte begonnen und dann von Rollenpaar zu Rollenpaar nach außen verlagert. So liegt nicht im gesamten zu formenden Bereich direkt von Anfang an der Anpressdruck an, sondern wandert nach und nach über die gesamte Breite der Wickelköpfe. Die besonders empfindlichen äußeren Bereiche der Wickelköpfe werden dabei zuletzt geformt. Spannungen können so besser verteilt und unerwünschte Verformungen vermieden werden.

Gemäß einer weiteren Ausführungsform der Erfindung weisen die Einzelrollen eine konische Form auf. Diese Form ermöglicht es, während des Formens eine verschieden starke Bearbeitung über die Breite einer Einzelrolle zu erzielen. Die Höhe der Wickelköpfe wird dann nicht einheitlich, sondern je nach Anordnung der Einzelrollen beispielsweise nach außen hin kleiner. Dadurch ist es möglich, die Wellenwicklungsmatte gezielter zu bearbeiten. Es ist aber auch denkbar, dass die Einzelrollen andere Formkonturen aufweisen. Es ist zudem denkbar, dass die Einzelrollen nicht alle einheitlich, sondern in unterschiedlichen Profilen ausgestaltet sind. Es ist daher denkbar, dass die Wickelkopfdicke b, die die Wellenwicklungsmatte nach dem Formen aufweist, nicht über die gesamte geformte Breite dieselbe Höhe aufweist, sondern variieren kann. Das Profil der Rollen kann in der unteren wie in der oberen Formreihe veränderbar sein, die maximale Höhe bleibt in der unteren Formreihe aber über alle Rollenpaare gleich. So ist gewährleistet, dass die Wellenwicklungsmatte auf einer Achse gleichmäßig aufliegen kann und während des Formprozesses stabil liegt. Eine instabile Lage könnte den Formprozess unterbrechen oder negativ beeinflussen, sodass die Wellenwicklungsmatte beschädigt und unbrauchbar werden könnte.

Gemäß einer weiteren Ausführungsform der Erfindung ist der Vorschub der Unterlage mit den Rollenpaaren synchronisiert. So kann eine gleichmäßige Bearbeitung der Wellenwicklungsmatte sichergestellt werden.

Gemäß einer weiteren Ausführungsform der Erfindung verfügen die Rollenpaare über einen eigenen Antrieb. Dies bietet den Vorteil, dass der Formvorgang noch genauer durchführbar ist als mit einem alleinigen Antrieb der durch die Vorrichtung geführten Unterlage und dass die Reibung auf der Wellenwicklungsmatte verringert ist, was Beschädigungen vorbeugen kann. Es ist auch denkbar, dass nur ein Teil der Rollenpaare über einen Antrieb verfügt, beispielsweise die einer der beiden Formreihen. Es ist auch denkbar, dass die Rollenpaare der oberen Formreihe über einen eigenen Antrieb verfügen und die Rollenpaare der unteren Formreihe über einen weiteren, separaten Antrieb.

Gemäß einer weiteren Ausführungsform der Erfindung ist die Vorrichtung zwischen den Einzelrollen teilbar und in ihrer Arbeitsbreite anpassbar ausgestaltet.

Dies bietet den Vorteil, dass die Breite der Antriebswellen, auf denen die Rollen angeordnet sind, angepasst werden können, wodurch die gesamte Arbeitsbreite der Vorrichtung variierbar ist. Arbeitsbreite ist in diesem Kontext definiert als die Breite, entlang derer eine Wellenwicklungsmatte einziehbar ist. Eine derart ausgestaltete Vorrichtung ist vielfältig auf verschieden breite Wellenwicklungsmatten anpassbar. Wellenwicklungsmatten variieren in ihrer Ausgestaltung sehr stark, je nachdem, was bzw. wo ihr vorgesehener Verwendungszweck ist. So kann die Vorrichtung beispielsweise für Wellenwicklungsmatten mit einer Breite von 50 mm bis 500 mm geeignet sein. Auch weitere, kleinere oder auch größere Abmessungen sind denkbar und durch die teilbare Ausgestaltung umsetzbar.

In bevorzugter Ausgestaltung können Bürsten zur Zwischenreinigung der Rollen vorgesehen sein. Der Einsatz von Bürsten dient der Aufrechterhaltung der Funktion der Vorrichtung und auch der Vermeidung von Beschädigungen. Es ist denkbar, die Bürsten zur Rollenreinigung einzusetzen oder aber auch, um die Wellenwicklungsmatten von Verunreinigungen zu befreien. Schmutzpartikel, beispielsweise Metallspäne, können zu unerwünschten Formergebnissen oder Beschädigungen sowohl an der Wellenwicklungsmatte als auch an der Vorrichtung führen und müssen daher regelmäßig entfernt werden.

Gemäß einem weiteren Aspekt der Erfindung ist ein Verfahren zum kontinuierlichen Formen einer zum Einzug in einen Stator, Rotor oder in ein Einziehwerkzeug vorgesehenen Wellenwicklungsmatte unter Zuhilfenahme einer eingangs beschriebenen Vorrichtung vorgesehen. Das Verfahren umfasst mehrere Schritte und beginnt mit dem Einzug der Wellenwicklungsmatte mit der Wickelkopfdicke a an der Einzugseite der Vorrichtung. Das ist die Wickelkopfdicke, die die ungeformte Wellenwicklungsmatte aufweist. Die Wellenwicklungsmatte wird auf der Unterlage kontinuierlich durch die Vorrichtung geführt. Dabei werden die Wickelköpfe kontinuierlich entlang der Achse X mittels der Rollenpaare der unteren und oberen Formreihe von einer Wickelkopfdicke a vor dem ersten korrespondierenden Rollenpaar der unteren und oberen Formreihe hin zu einer Wickelkopfdicke b nach Führung durch das letzte korrespondierenden Rollenpaar der unteren und oberen Formreihe geformt. Danach wird die Wellenwicklungsmatte kontinuierlich aus der Vorrichtung ausgegeben. Der Teil der Wellenwicklungsmatte, der die Vorrichtung bereits verlassen hat, weist die Wickelkopfdicke b auf.

Weitere Merkmale, Details und Vorteile der Erfindung ergeben sich aus dem Wortlaut der Ansprüche sowie aus der folgenden Beschreibung von Ausführungsbeispielen basierend auf der Zeichnung.

Es zeigen:
Figur 1: Eine Seitenansicht einer Vorrichtung zum Formen einer zum Einzug in einen Stator, Rotor oder in ein Einziehwerkzeug vorgesehenen Wellenwicklungsmatte;
Figur 2: Die Vorrichtung gemäß Figur 1 in einer perspektivischen Ansicht;
Figur 3: Eine weitere Ausführungsform einer Vorrichtung zum Formen einer zum Einzug in einen Stator, Rotor oder in ein Einziehwerkzeug vorgesehenen Wellenwicklungsmatte in einer perspektivischen Ansicht; und
Figur 4: Die Vorrichtung gemäß Figur 3 in einer Seitensicht.

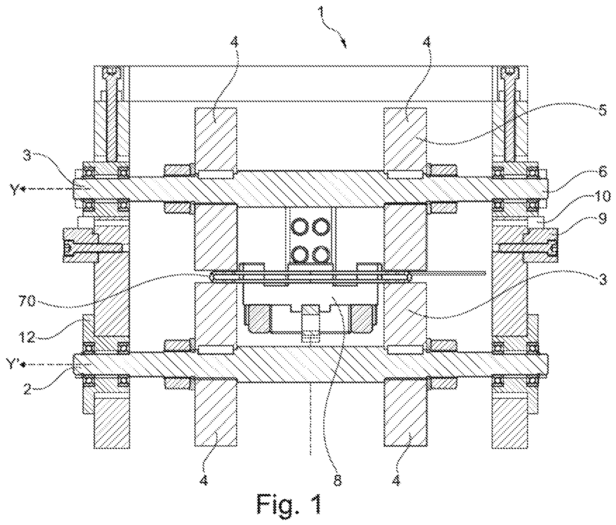

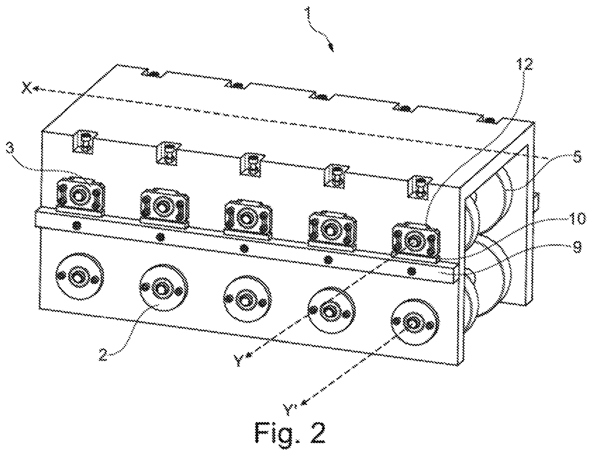

Figur 1 zeigt eine Vorrichtung 1 zum Formen einer zum Einzug in einen Stator, Rotor oder in ein Einziehwerkzeug vorgesehen Wellenwicklungsmatte 7 in einer Seitenansicht, Figur 2 zeigt die Vorrichtung 1 in einer perspektivischen Ansicht. Die Wellenwicklungsmatte 7 wird entlang einer Achse X durch die Vorrichtung 1 geführt und im Bereich ihrer Wickelköpfe 70 kontinuierlich mittels Rollenpaaren 4 einer unteren und einer oberen Formreihe 2,3 geformt. Antriebswellen 6 der unteren Formreihe 2 sind in diesem Ausführungsbeispiel fest verbaut und nicht höhenvariabel und rotieren um eine Achse Y'. Die Antriebswellen 6 der oberen Formreihe 3 sind hier höhenvariabel ausgestaltet und rotieren um eine Achse Y. Es ist möglich, durch die Verwendung einer Einstellleiste 9 und Endmaßen 10 eine schnelle und dabei genaue Anpassung der Höhe der Antriebswellen 6 vorzunehmen. Die Einstellleiste 9 ist fest an der Vorrichtung 1 angebracht. Das Endmaß 10 wird zwischen der Einstellleiste 9 und dem Wellengehäuse 12 der Antriebswelle 6 angebracht und ist auswechselbar. Auf diese Art lässt sich die Höhe der Antriebswelle 6 in der Vorrichtung 1 exakt bestimmen und unkompliziert austauschen. Zudem ist diese Art der Anpassung wenig fehleranfällig und unerwünscht Fehleinstellungen können vermieden werden.

In Figur 2 ist gezeigt, wie die Höhe der Antriebswellen 6 von Position zu Position der Rollenpaare 4 in Bewegungsrichtung der Unterlage 8 und damit auch der Wellenwicklungsmatte 7 dergestalt verändert ist, dass der Abstand zwischen den korrespondierenden Rollenpaaren 4 der unteren und oberen Formreihe 2,3 abnimmt. An jeder Position ist ein Endmaß 10 vorgesehen, dessen Höhe von Position zu Position abnimmt und damit die Rollenpaare 4 der oberen Formreihe 3 in Bewegungsrichtung kontinuierlich näher an die Rollenpaare 4 der unteren Formreihe 2 heranrücken.

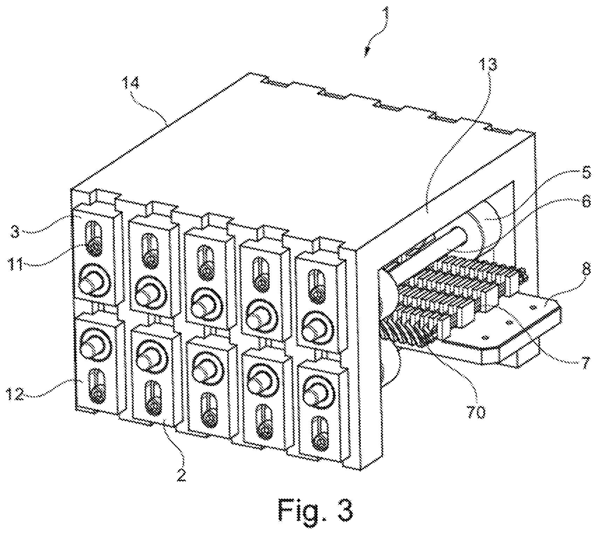

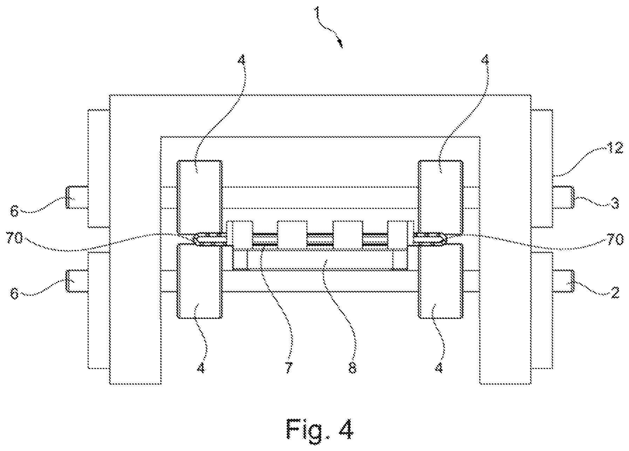

In den Figuren 3 und 4 ist eine Ausführungsform gezeigt, bei der sowohl die Antriebswellen 6 der unteren Formreihe 2 als auch die Antriebswellen 6 der oberen Formreihe 3 höhenvariabel ausgestaltet sind. Es sind Fixierungen 11 am Wellengehäuse 12 vorgesehen, die die Antriebswellen 6 in ihrer Position halten. Diese sind lösbar ausgestaltet, beispielsweise in Form einer Verschraubung. Sobald eine Fixierung 11 gelöst ist, kann die korrespondierende Antriebswelle 6 in ihrer Höhe verstellt werden. Nach Erreichen der gewünschten Endposition wird die Antriebswelle 6 wieder mittels der Fixierung 11 fest an der Vorrichtung angebracht, sodass sie im laufenden Formungsprozess nicht verrutschen und ihre Höhe verändern kann. Durch gleichmäßige Führung von oben und unten ist die Wellenwicklungsmatte 7 sicher und stabil in der Vorrichtung 1 geführt. Die Unterlage 8, die in diesem Ausführungsbeispiel als Linearmagazin ausgestaltet ist, wird von der Einzugsseite 13 durch die Vorrichtung 1 in Richtung des Auszugs 14 geführt.

### Bezugszeichenliste

1 Vorrichtung
2 Untere Formreihe
3 Obere Formreihe
4 Rollenpaar
5 Einzelrolle
6 Antriebswelle
7 Wellenwicklungsmatte
70 Wickelköpfe
8 Unterlage
9 Einstellleiste
10 Endmaß
11 Fixierung
12 Wellengehäuse
13 Einzugsseite
14 Ausgabeseite
X Achse
Y Achse
Y' Achse

## Patentansprüche

1. Vorrichtung (1) zum Formen einer zum Einzug in einen Stator, Rotor oder in ein Einziehwerkzeug vorgesehenen Wellenwicklungsmatte (7), die seitliche Bereiche in Form von Wickelköpfen (70) aufweist, umfassend
eine untere und eine obere entlang einer Achse X verlaufende Formreihe (2,3), zwischen denen die Wellenwicklungsmatte (7) auf einer Unterlage (8) hindurchführbar ist;
wobei die Formreihen (2,3) jeweils aus wenigstens zwei Rollenpaaren (4) gebildet sind,
wobei jedes Rollenpaar (4) aus zwei auf einer um eine Achse Y, Y' rotierenden Antriebswelle (6) angeordneten Einzelrollen (5) gebildet ist,
wobei die Achsen Y,Y' lotrecht zur Achse X angeordnet sind,
wobei die Rollenpaare (4) zur Formung der Wickelköpfe (70) vorgesehen sind, und
wobei sich der Abstand der Formreihen (2,3) zueinander von einer Einzugseite (13) zu einer Ausgabeseite (14) der Vorrichtung (1) hin verringert.

2. Vorrichtung (1) nach Anspruch 1, **dadurch gekennzeichnet, dass** zumindest die obere Formreihe (3) höhenverstellbar ausgestaltet ist.

3. Vorrichtung (1) nach Anspruch 2, **dadurch gekennzeichnet, dass** die Rollenpaare (4) der oberen Formreihe (3) unabhängig voneinander höhenverstellbar sind.

4. Vorrichtung (1) nach Anspruch 3, **dadurch gekennzeichnet, dass** ein der angestrebten Dicke der Wickelköpfe (70) entsprechendes Endmaß (10) zur Einstellung der Rollenpaare (4) vorgesehen ist.

5. Vorrichtung (1) nach einem der Ansprüche 1 bis 4, **dadurch gekennzeichnet, dass** der Abstand zwischen den Einzelrollen (5) jedes Rollenpaars (4) auf der Antriebswelle (6) variabel einstellbar ist.

6. Vorrichtung (1) nach einem der Ansprüche 1 bis 5, **dadurch gekennzeichnet, dass** die Einzelrollen (5) eine konische Form aufweisen.

7. Vorrichtung (1) nach einem der Ansprüche 1 bis 6, **dadurch gekennzeichnet, dass** der Vorschub der Unterlage (8) mit den Rollenpaaren (4) synchronisiert ist.

8. Vorrichtung (1) nach einem der Ansprüche 1 bis 7, **dadurch gekennzeichnet, dass** die Rollenpaare (4) über einen eigenen Antrieb verfügen.

9. Vorrichtung (1) nach einem der Ansprüche 1 bis 8, **dadurch gekennzeichnet, dass** die Vorrichtung (1) zwischen den Einzelrollen (5) teilbar und in ihrer Arbeitsbreite anpassbar ausgestaltet ist.

10. Verfahren (1) zum kontinuierlichen Formen einer zum Einzug in einen Stator, Rotor oder in ein Einziehwerkzeug vorgesehenen Wellenwicklungsmatte (7) unter Zuhilfenahme einer Vorrichtung (1) gemäß einem der Ansprüche 1 bis 9, umfassend die Schritte:
- Einzug der Wellenwicklungsmatte (7) mit einer Wickelkopfdicke a an der Einzugseite der Vorrichtung (1)
- Führen der Wellenwicklungsmatte (7) auf der Unterlage (8) durch die Vorrichtung (1)
- Kontinuierliches Formen der Wickelköpfe (70) entlang der Achse X mittels der Rollenpaare (4) der unteren und oberen Formreihe (2,3) von einer Wickelkopfdicke a vor dem ersten korrespondierenden Rollenpaar (4) der unteren und oberen Formreihe (2,3) hin zu einer Wickelkopfdicke b nach Führung durch das letzte korrespondierenden Rollenpaar (4) der unteren und oberen Formreihe (2,3)
- Ausgabe der Wellenwicklungsmatte (7) aus der Vorrichtung (1) mit einer Wickelkopfdicke b.

## Claims

1. Device (1) for shaping a wave winding mat (7) which is intended to be pulled into a stator, rotor or into a pull-in tool and which has lateral regions in the form of winding heads (70), comprising
a lower and an upper shaping row (2, 3) which run along an axis X and between which the wave winding mat (7) can be guided on a support (8);
wherein the shaping rows (2, 3) are each formed from at least two pairs of rollers (4),
wherein each pair of rollers (4) is formed from two individual rollers (5) arranged on a drive shaft (6) rotating about an axis Y, Y',
wherein the axes Y, Y' are arranged perpendicular to the axis X,
wherein the pairs of rollers (4) are provided for shaping the winding heads (70), and
wherein the spacing of the shaping rows (2, 3) from one another decreases from a pull-in side (13) to an output side (14) of the device (1).

2. Device (1) according to Claim 1, **characterized in that** at least the upper shaping row (3) is vertically adjustable.

3. Device (1) according to Claim 2, **characterized in that** the pairs of rollers (4) of the upper shaping row (3) are vertically adjustable independently of one another.

4. Device (1) according to Claim 3, **characterized in that** a final dimension (10) corresponding to the desired thickness of the winding heads (70) is provided for adjusting the pairs of rollers (4).

5. Device (1) according to any of Claims 1 to 4, **characterized in that** the distance between the individual rollers (5) of each pair of rollers (4) on the drive shaft (6) is variably adjustable.

6. Device (1) according to any of Claims 1 to 5, **characterized in that** the individual rollers (5) have a conical shape.

7. Device (1) according to any of Claims 1 to 6, **characterized in that** the feed of the support (8) is synchronized with the pairs of rollers (4).

8. Device (1) according to any of Claims 1 to 7, **characterized in that** the pairs of rollers (4) have their own drive.

9. Device (1) according to any of Claims 1 to 8, **characterized in that** the device (1) can be shared between the individual rollers (5) and can be adapted in terms of its working width.

10. Method (1) for continuously shaping a wave winding mat (7) which is intended to be pulled into a stator, rotor or into a pull-in tool using a device (1) according to any of Claims 1 to 9, comprising the steps of:
- pulling in the wave winding mat (7) with a winding head thickness a at the pull-in side of the device (1)
- guiding the wave winding mat (7) on the support (8) through the device (1)
- continuously shaping the winding heads (70) along the axis X by means of the pairs of rollers (4) of the lower and the upper shaping row (2, 3) from a winding head thickness a upstream of the first corresponding pair of rollers (4) of the lower and the upper shaping row (2, 3) to a winding head thickness b after guidance by the last corresponding pair of rollers (4) of the lower and the upper shaping row (2, 3)
- outputting the wave winding mat (7) from the device (1) with a winding head thickness b.

## Revendications

1. Dispositif (1) pour former une natte ondulée (7) de bobinages prévue pour une insertion dans un stator, un rotor ou un outil d'insertion, qui présente des zones latérales en forme de têtes de bobinage (70), comprenant une rangée inférieure de mise en forme et une rangée supérieure de mise en forme (2, 3) s'étendant le long d'un axe X, entre lesquelles la natte ondulée (7) de bobinages est apte à être acheminée sur un support (8) ; dans lequel les rangées (2, 3) de mise en forme sont formées, chacune, par au moins deux paires de rouleaux (4),
dans lequel chaque paire de rouleaux (4) est formée par deux rouleaux individuels (5) disposés sur un arbre d'entraînement (6) tournant autour d'un axe Y, Y',
les axes Y, Y' étant agencés de manière perpendiculaires à l'axe X,
les paires de rouleaux (4) sont prévues de manière à former les têtes de bobinage (70), et
la distance entre les rangées (2, 3) de mise en forme allant en diminuant depuis un côté d'alimentation (13) jusqu'à un côté de sortie (14) du dispositif (1).

2. Dispositif (1) selon la revendication 1, **caractérisé en ce qu'**au moins la rangée supérieure (3) de mise en forme est configurée de manière à être réglable en hauteur.

3. Dispositif (1) selon la revendication 2, **caractérisé en ce que** les paires de rouleaux (4) de la rangée supérieure (3) de mise en forme sont réglables en hauteur indépendamment les unes des autres.

4. Dispositif (1) selon la revendication 3, **caractérisé en ce qu'**une dimension finale (10) correspondant à l'épaisseur souhaitée des têtes de bobinage (70) est prévue pour le réglage des paires de rouleaux (4).

5. Dispositif (1) selon l'une des revendications 1 à 4, **caractérisé en ce que** la distance entre les rouleaux individuels (5) de chaque paire de rouleaux (4) sur l'arbre d'entraînement (6) est réglable de manière variable.

6. Dispositif (1) selon l'une des revendications 1 à 5, **caractérisé en ce que** les rouleaux individuels (5) présentent une forme conique.

7. Dispositif (1) selon l'une des revendications 1 à 6, **caractérisé en ce que** l'avance du support (8) est synchronisée avec les paires de rouleaux (4).

8. Dispositif (1) selon l'une des revendications 1 à 7, **caractérisé en ce que** les paires de rouleaux (4) présentent un entraînement séparé.

9. Dispositif (1) selon l'une des revendications 1 à 8, **caractérisé en ce que** le dispositif (1) est divisible entre les rouleaux individuels (5) et **en ce qu'**il est réglable en termes de largeur de travail.

10. Procédé (1) de mise en forme continue d'une natte ondulée (7) de bobinages destinée à être insérée dans un stator, un rotor ou un outil d'insertion, au moyen d'un dispositif (1) selon l'une quelconque des revendications 1 à 9, comportant les étapes suivantes :
- introduire la natte ondulée (7) de bobinages avec une épaisseur de têtes de bobinage a sur le côté alimentation du dispositif (1)
- guider la natte ondulée (7) de bobinages sur le support (8) à travers le dispositif (1)
- mise en forme continue des têtes de bobinage (70) selon l'axe X au moyen des paires de rouleaux (4) des rangées inférieure et supérieure (2, 3) de mise en forme à partir d'une épaisseur de têtes de bobinage a avant la première paire de rouleaux correspondante (4) des rangées inférieure et supérieure (2, 3) de mise en forme jusqu'à une épaisseur de têtes de bobinage b après guidage à travers la dernière paire de rouleaux correspondante (4) des rangées inférieure et supérieure (2, 3) de mise en forme
- sortie de la natte ondulée (7) de bobinages du dispositif (1) avec une épaisseur de têtes de bobinage B.
